# EUROPEAN PATENT SPECIFICATION

(11) **EP 0 239 231 B1**
(45) Date of publication and mention of the grant of the patent: **04.08.1993**
(21) Application number: 87301495.5
(22) Date of filing: 20.02.1987
(51) Int. Cl.: G05B 19/407, B23Q 15/24

(54) **Apparatus for stopping carriage at preselected position**
Gerät zum Stoppen eines Wagens an einer programmierten Haltestelle
Appareil pour arrêter un support à une position présélectionnée

(30) Priority: 26.02.1986 JP 41193/86; 27.02.1986 JP 28158/86
(43) Date of publication of application: 30.09.1987
(73) Proprietor: Shinko Electric Co. Ltd., Chuo-ku Tokyo 103 (JP)
(72) Inventor: Katou, Kazumichi, Ise-chi Mie-ken (JP); Kurita, Yutaka, Ise-chi Mie-ken (JP); Iwamoto, Hiroshi, Ise-chi Mie-ken (JP)
(74) Representative: Hallam, Arnold Vincent

(56) References cited:
- US-A- 4 009 428
- US-A- 4 230 978
- US-A- 4 514 674
- RADIO AND ELECTRONICS WORLD, September 1983, London, GB, pages 33-35; "Rotary encoder interface"

## Description

### BACKGROUND OF THE INVENTION

### Field of the Invention

This invention relates to apparatus for stopping a carriage, movable along a track for transporting materials in a factory or the like, at stations for loading and unloading.

### Prior Art

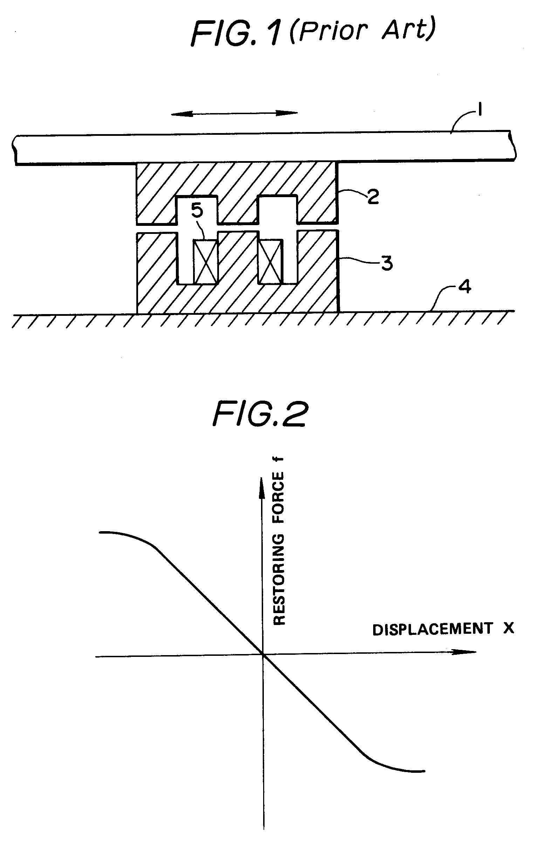

It is desired to stop the carriage exactly at each station. Fig. 1 shows a conventional stop apparatus which applies a braking force to a carriage 1 in a non-contact manner to stop the carriage at the station. The stop apparatus comprises a secondary iron core 2 secured to an underside of the carriage 1, and a primary iron core 3 mounted on a floor 4 at a station or stop position. The secondary core 2 is brought into opposed relation to the primary core 3 when the carriage 1 is moved to the station. With this arrangement, when the carriage 1 reaches the station, a coil 5 wound around the primary core 3 is energized, so that the primary core 3 magnetically attracts the secondary core 2 to stop the carriage at the preselected position.

In the case where the carriage is of the non-contact type, such as either the air-floating type or the magnetic-floating type, the carriage is subjected to a considerable oscillation or shaking along the track at the stop position and therefore it takes considerable time before the carriage is caused to stop perfectly.

Fig. 2 is a graph showing the relation between a displacement X of the carriage from the exact stop position and a restoring force f. As can be seen from Fig. 2, if the displacement X is positive, the restoring force is negative. On the other hand, if the displacement X is negative, the restoring force f is positive. Therefore, the carriage is oscillated along the track about an equilibrium point where the displacement X is zero, so that as a result of undergoing friction and resistances offered by the air and the eddy current, the carriage is finally caused to stop at the equilibrium point.

Since the stop apparatus of the type described is capable of stopping the carriage 1 in a non-contact manner, it is advantageous over stop apparatuses relying for its operation on a mechanical contact in that maintenance is easier since dust and dirt will not be produced. Therefore, in the case where such a non-contact type stop apparatus is utilized in a magnetic-floating type carriage such as one propelled by a linear induction motor, the driving, support and braking of the carriage are all achieved in a non-contact manner. Such an arrangement is most suited for use in a clean room where the production of dust must be avoided as much as possible.

However, the above-mentioned arrangement has not been realized because no mechanical friction develops between the carriage and the track along which it travels, so that the oscillation of the carriage is not attenuated or absorbed rapidly enough as compared with a wheeled carriage having wheels held in rolling engagement with a track to provide friction between the wheels and the tracks.

In US-A-4009428 a control system is described for controlling relative movement of a head member over a surface such as a plate member in accordance with digital input information. This is achieved by controlling the phase of the translating field vector to lead or lag the position vector of the surface by controlling an electrical angle which is a function dependent on the direction of acceleration or deceleration required. As a consequence, the head member is accelerated or decelerated smoothly and stopped quickly at the predetermined position on the surface. However, such a system requires complex electronic controls of a very sophisticated nature, unsuited to the task of stopping a carriage moving along a track for transporting materials in a factory. In this type of application, the preselected stopping position is generally speaking a fixed position. The carriage can be driven along the track to the preselected stopping position but at that point there is then a problem of causing the carriage to stop at the stopping position without excessive oscillation and without excessive time delay. This problem occurs particularly where the carriage is supported in a frictionless manner over the track since braking forces between the carriage and the track cannot normally be applied.

It is an object of the present invention to provide a simple means for solving this problem.

In US-A-4230978, a servo system is used to control the stopping position of a sliding member. There is no description in this specification of using a magnetic attraction force to stop the slider.

US-A-4514674 discloses an apparatus including a sensor for detecting a movement of a stator which corresponds to the carriage in the present invention but does not tackle the problem of controlling the stopping of the stator.

It is therefore an object of this invention to provide a stop apparatus capable of completely stopping a carriage of the non-contact type at a preselected stop position in a short time.

According to the present invention, there is provided an apparatus for stopping a carriage as defined in Claims 1 and 2.

### BRIEF DESCRIPTION OF THE DRAWINGS

Fig. 1 is a fragmentary view of a stop apparatus provided in accordance with the prior art;
Fig. 2 is a graph showing the relation between the restoring force and the displacement;
Fig. 3 is a perspective view of a stop apparatus provided in accordance with the present invention;
Fig. 4 is a side-elevational view of the stop apparatus of Fig. 3;
Fig. 5 is a fragmentary view of a carriage, showing a speed sensor;
Fig. 6 is a graph showing the relation between the displacement and the restoring force when electromagnets are supplied with a predetermined voltage;
Fig. 7 is a graph showing the relation between the displacement and the restoring force when the voltage corresponding to the speed of oscillation is added;
Fig. 8A is a graph showing the relation between the displacement and the time required for the carriage to stop completely when the electromagnets are supplied with a voltage of a predetermined level;
Fig. 8B is a graph showing the same relation as Fig. 8A, but when the restoring force exerted by the electromagnet is attenuated in a hysteresis loop-fashion as in Fig. 7;
Fig. 9 is a graph showing the relation between the displacement and the restoring force when the electromagnets are supplied with respective voltages of predetermined different levels.
Fig. 10 is a view similar to Fig. 3 but showing a modified stop apparatus;
Fig. 11 is a view similar to Fig. 3 but showing another modified stop apparatus; and
Fig. 12 is a schematic side-elevational view of the stop apparatus of Fig. 11.

### DESCRIPTION OF THE PREFERRED EMBODIMENTS OF THE INVENTION

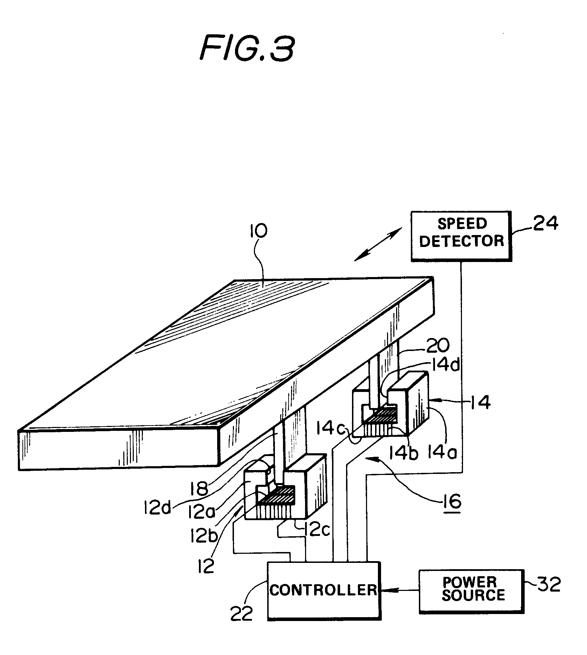

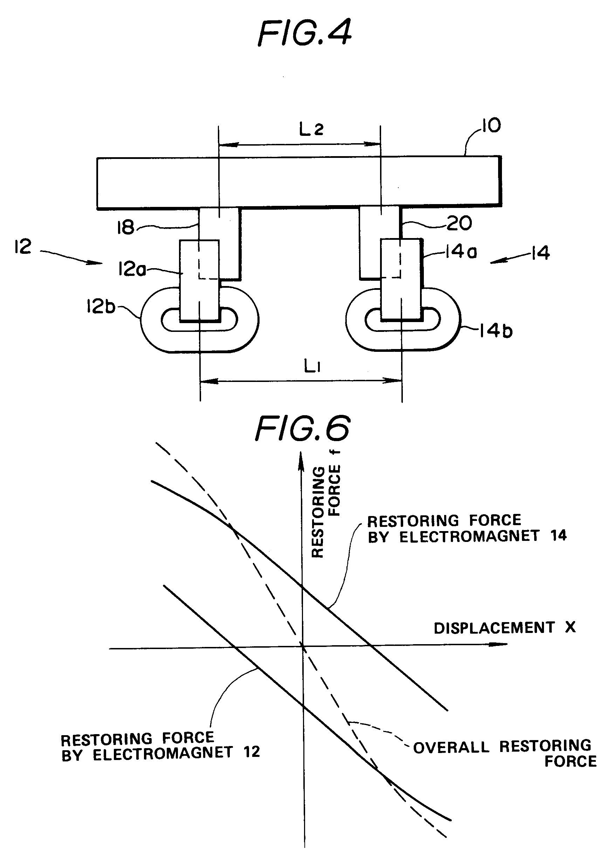

A carriage 10 is movable along a track in opposite directions indicated by arrows in Fig. 3. Although not shown in the drawings, the carriage 10 is propelled to move along the track by a linear induction motor and is supported magnetically in non-contact relation to the track. The carriage may be of the air-floating type. A pair of electromagnets 12 and 14 are mounted on a floor at a stop position or station 16 and are spaced from each other a distance L1 along the track, that is, in the direction of travel of the carriage (Fig. 4). Each of the electromagnets 12 and 14 comprises an iron core 12a, 14a of generally upwardly-opening channel-shaped cross-section, and an exciting coil 12b, 14b wound around a base portion 12c, 14c of the core.

A pair of secondary iron cores 18 and 20 are secured to an underside of the carriage 10 and are spaced from each other a distance L2 in the direction of travel of the carriage, the distance L2 being shorter than the distance L1 (Fig. 4). The secondary cores 18 and 20 are in the form of a rectangular plate and are adapted to pass through the openings 12d and 14d of the cores 12a and 14a without contacting them during the travel of the carriage 10.

The coils 12b and 14b are connected to output terminals of a controller 22. A speed detector 24 is provided for detecting the speed of the carriage 10 to produce a speed detecting signal. The controller 22 is responsive to the speed detecting signal to control the voltages applied respectively to the coils 12b and 14b.

As shown in Fig. 5, the speed detector 24 comprises a plate 26 secured to a side face of the carriage 10 and having a pair of vertically spaced first and second rows of slots 26a and 26b formed therethrough and extending horizontally, and a pair of photosensors 28 and 30 for detecting the first and second rows of slots 26a and 26b, respectively, to produce respective pulse signals, a device for determining the speed direction of the carriage from the pulse signals from the photosensors 28 and 30, and a F/V converter for converting the pulse signals into analog signals( speed signals). Each of the first and second rows of slots 26a and 26b are spaced a predetermined pitch from one another, and the first and second row of slots are out of phase from each other, so that when the carriage 10 moves in a normal or forward direction, the pulse signal outputted from the first photosensor 28 is advanced in phase from the pulse signal outputted from the second photosensor 30, and vice versa.

The controller 22 is of the chopper type and controls DC current from a power source 32 in accordance with the value of the speed signal and the sign ( + or - ) of the speed signal representative of the speed direction. More specifically, the controller 22 comprises an adder responsive to the detecting signal from the speed detector 24 for adding a voltage, corresponding to the speed of oscillation or movement of the carriage 10, to a predetermined voltage, a triangular wave-generator, a comparator for comparing the output of each adder with a triangular wave outputted from the triangular wave-generator, and an FET which receives the output of each comparator as a gate signal so as to allow the power source 32 to supply the DC voltage to each of the coils 12b and 14b.

Although not shown in the drawings, a position sensor is provided for detecting the approach of the carriage 10 toward the stop position so as to produce a sensing signal. The controller 22 is responsive to this sensing signal to energize the coils 12b and 14b so that the electromagnets 12 and 14 attract the respective secondary cores 18 and 20 to apply a braking force to the carriage 10.

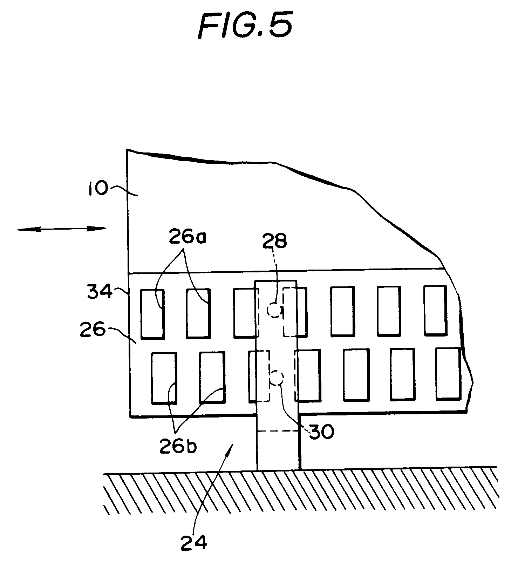

The operation of the stop apparatus will now be described with reference to Figs. 6 to 9.

First, for a better understanding, the case where the electromagnets 12 and 14 are supplied with a predetermined voltage of the same level will be described with reference to Fig. 6. Fig. 6 is a graph showing the relation between displacement X and restoring force f at the stop position or station. Where the displacement is zero (X = 0), the carriage 10 is positioned with respect to the pair of electromagnets 12 and 14 as shown in Fig. 4. More specifically, the mid point between the cores 12a and 14a coincides with the mid point between the secondary cores 18 and 20. In this condition (X = 0), the core 12a of the electromagnet 12 magnetically attracts its mating secondary core 18 in a negative or minus direction (i.e. a left-hand direction in Fig. 4) while the core 14a of the electromagnet 14 magnetically attracts its mating secondary core 20 in a positive or plus direction (i.e., a right-hand direction). In this case, the attractive forces (restoring forces) applied respectively by the electromagnets 12 and 14 are equal to each other, and therefore the overall restoring force f exerted on the carriage 10 is zero.

If the carriage 10 is displaced from the equilibrium point in the positive direction, so that the displacement X becomes positive, the restoring force exerted on the carriage by the electromagnet 12 in the negative direction becomes greater while the restoring force exerted by the electromagnet 14 in the positive direction becomes smaller. As a result, the resultant overall restoring force f indicated in a broken line in Fig. 6 is exerted on the carriage 10, so that the carriage 10 is drawn in the negative direction. On the other hand, if the carriage 10 is displaced from the equilibrium point in the negative direction, the attractive force exerted on the secondary core 18 by the electromagnet 12 becomes lower while the attractive force exerted on the secondary core 20 by the electromagnet 14 becomes greater, so that the carriage 10 is drawn in the positive direction. In other words, the carriage 10 is oscillated about the equilibrium point (X = 0) along the direction of movement thereof.

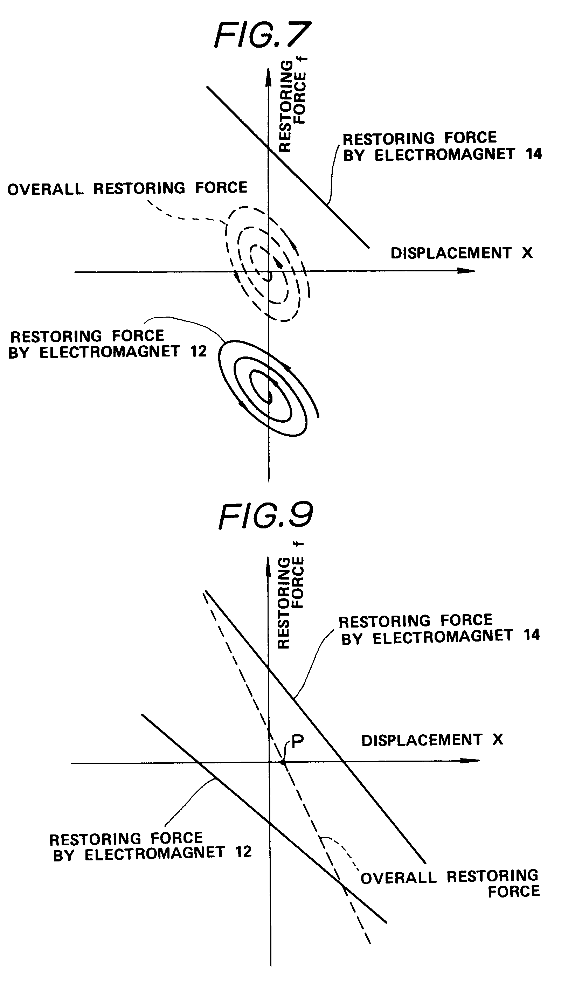

Fig. 7 is a graph showing the relation between the displacement X and the restoring force f when the voltage applied to the electromagnet 14 is kept to a predetermined level while the electromagnet 12 is supplied with the exciting voltage composed of the voltage of a predetermined level and the voltage corresponding to the speed of oscillation of the carriage 10. As described above, the exciting voltage is produced through the controller 22. In Fig. 7, the restoring force exerted on the carriage 10 by the electromagnet 12 is indicated by an eddy-like solid line while the overall restoring force f exerted on the carriage is indicated by an eddy-like broken line. Arrows on the eddy-like lines indicate the direction of the speed or oscillation of the carriage 10. As can be seen from Fig. 7, when the direction of the speed is positive, that is to say, the arrow is directed in a right-hand side, the exciting voltage of the electromagnet 12 is increased to increase its attractive force so as to draw the carriage 10 in the negative direction. On the other hand, when the direction of the speed of the carriage 10 is negative, the exciting voltage of the electromagnet 12 is decreased, so that the carriage 10 is drawn in the positive direction. Thus, during the time when the carriage 10 is oscillated at the stop position, the carriage 10 is subjected to the force acting in a direction opposite to the direction of movement of the carriage 10. As a result, the oscillation of the carriage 10 is gradually attenuated, and the exciting voltage is correspondingly reduced gradually. Therefore, the overall restoring force f is also reduced to zero, depicting a hysteresis loop, thereby stopping the movement of the carriage 10 rapidly. In this case, the energy corresponding to the area of the hysteresis loop is consumed by the electromagnet 12 and the controller 22. In this example, although the voltage, corresponding to the speed of oscillation of the carriage 10, is added only to the voltage of the predetermined level of the electromagnet 12, such voltage corresponding to the speed of oscillation of the carriage may also be added to the voltage of the predetermined level of the electromagnet 14 as well.

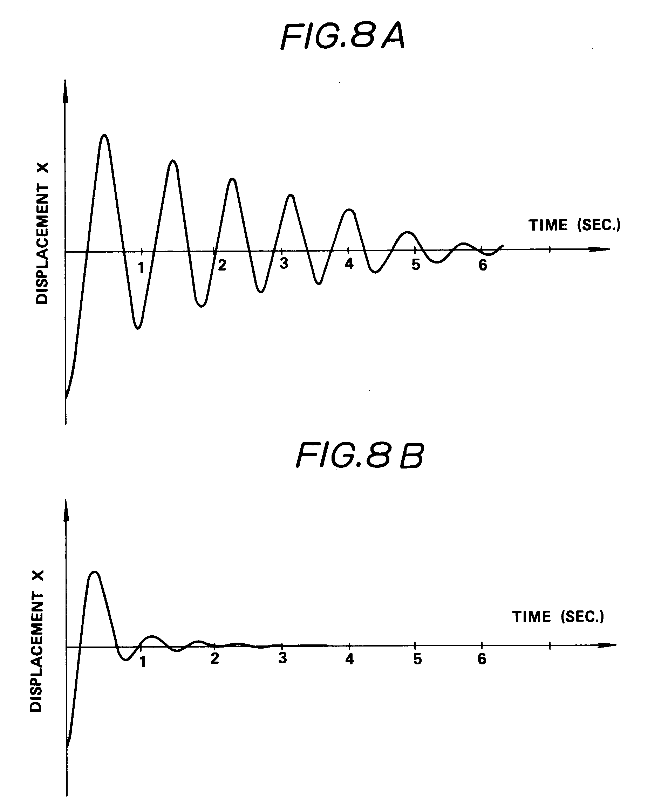

Fig. 8A is a graph showing attenuation characteristics, that is, the relation between the displacement X and the time required for the carriage to stop completely when the electromagnets 12 and 14 are supplied with a voltage of a predetermined level. Fig. 8B is a graph showing the same relation when the restoring force exerted by the electromagnet 12 is attenuated in a hysteresis loop-fashion as in Fig. 7. As can be seen from these Figures, in the latter case, the oscillation of the carriage 10 is attenuated to zero much more quickly than the former case. Actually, in the former case, the carriage is not caused to stop even 6 seconds later whereas in the latter case, the oscillation of the carriage 10 is caused to cease about 2 seconds later.

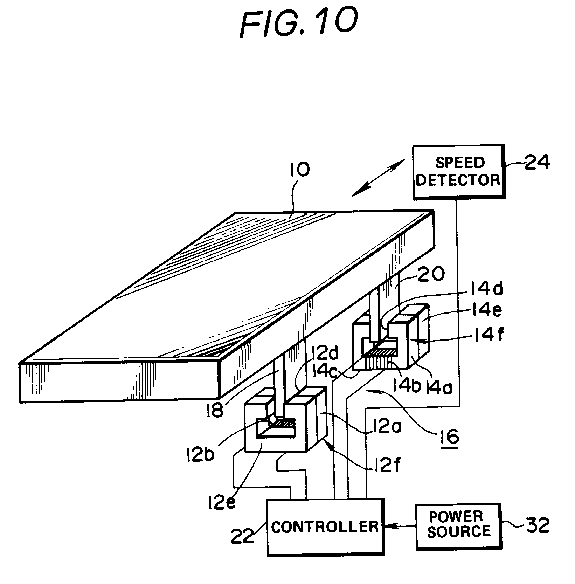

Fig. 9 is a graph showing the relation between the displacement X and the restoring force when the electromagnets 12 and 14 are supplied with respective voltages of predetermined different levels. In this case, the voltage exciting the electromagnet 14 is greater than the voltage exciting the electromagnet 12. With this arrangement, the overall restoring force f is eccentric from the zero point in the right-hand direction, and the carriage 10 is designed to stop at point P indicated in Fig. 9. Thus, the stop position of the carriage 10 can be preselected by determining the exciting voltages applied to the electromagnets 12 and 14. This is achieved due to the fact that the distance L1 between the cores 12a and 14a is different from the distance L2 between the secondary cores 18 and 20. If the distances L1 and L2 are equal to each other, such an effect is not achieved, in which case the carriage 10 is always caused to stop with the displacement X of 0.

As described above, the voltage corresponding to the speed of oscillation of the carriage 10 at the stop position is added to at least one of the voltages of the predetermined levels of the two electromagnets 12 and 14 when the carriage is to stop at the stop position or station, so that the overall restoring force exerted on the carriage can be reduced gradually to zero in a hysteresis loop-fashion.

The distance L2 may be greater than the distance L1. And, the electromagnets 12 and 14 may be mounted on the carriage 10, and the secondary cores 18 and 20 may be mounted on the floor. In addition, instead of the voltage corresponding to the speed of oscillation of the carriage, the electromagnet may be controlled by an electric current corresponding to the oscillation speed.

According to a modified form of the invention shown in Fig. 10, the electromagnets 12 and 14 are replaced by two magnet means, respectively. Each of the magnet means comprises a permanent magnet 12e, 14e of a predetermined magnetic force and an electromagnet 12f, 14f. A voltage, corresponding to the speed of oscillation of the carriage 10, is applied to the electromagnet under the control of the controller 22, so that the electromagnet produces a magnetic force or attractive force corresponding to the oscillation speed of the carriage 10.

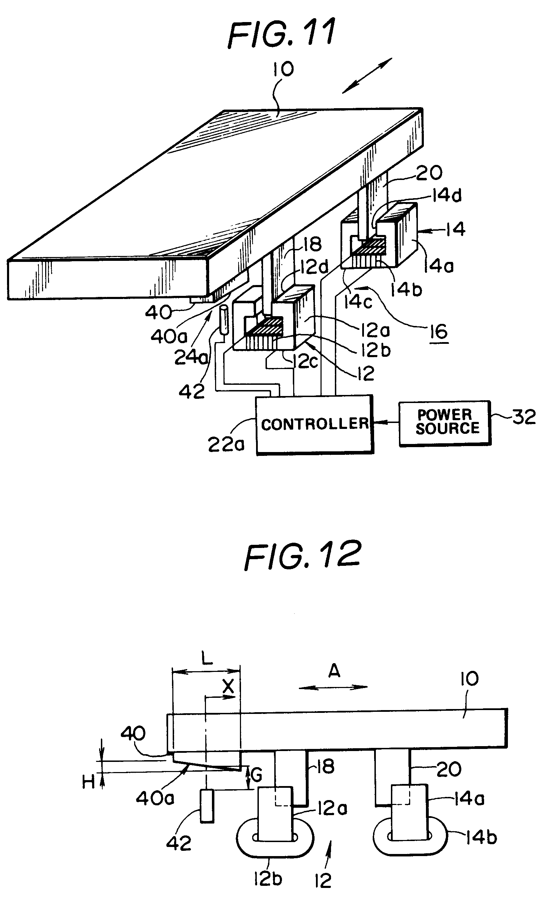

According to another modified form of the invention shown in Figs. 11 and 12, detector means 24a replaces the speed detector 24 of Fig. 3. The detector means 24a comprises a wedge-shaped plate 40 of an electrically conductive material, such as copper, secured to the underside of the carriage 10, and a sensor 42 of the eddy current type supported on the floor. The plate 40 has a lower flat surface 40a inclined along the track, that is, in the direction of movement of the carriage 10, as best shown in Fig. 12. The inclined surface 40a of the plate 40 is brought into vertically spaced, opposed relation to the sensor 42 when the carriage 10 is at the stop position. The sensor 42 senses a distance or gap G between the sensor 42 and the inclined surface 40a of the plate 40 to produce a sensing signal.

When the carriage 10 approaches the stop position or station, the coils 12b and 14b are energized under the control of a controller 22a to attract the respective secondary cores 18 and 20 to apply a braking force to the carriage 10, so that the carriage 10 is oscillated along the track as indicated in arrows. In this case, the gap G is proportional to an oscillation displacement X. In other words, if the length of the inclined surface 40a in the horizontal direction is represented by L and the height or vertical dimension of the inclined surface 40a between one end of the inclined surface 40a and the other end is represented by H, then G = (H/L) X is provided. Therefore, the output of the sensor 42 is proportional to the displacement X. The sensing signal outputted from the sensor 42 and representing the gap G is applied to the controller 22a as a feedback signal to control the exciting voltage applied to the coils 12b and 14b. More specifically, when the carriage 10 moves toward the stop position, a lower exciting voltage is applied. On the other hand, when the carriage 10 moves away from the stop position, a higher exciting voltage is applied, so that the oscillation exerted on the carriage 10 is reduced to zero, thereby completely stopping the carriage in a relatively short time.

With the detector 24a, a slight oscillation displacement on the order of several mm can be sensed easily and inexpensively in a non-contact manner. If the oscillation displacement is on the order of several tens of mm, such a displacement can be suitably detected by suitably determining the inclination of the inclined surface 40a. The sensor 42 may be of any other type such as the capacitance type.

## Claims

1. An apparatus for stopping a moving member (10) at a preselected position by electromagnetic means including the detection of the distance (X) of the moving member (10) from said position and the application of electromagnetic force (f) to the member tending to reduce said distance (X)
characterised in that the moving member is a carriage (10) movable along a track and the apparatus comprises
(a) at least two magnet means (12,14) mounted on the carriage (10), and spaced from each other along the track, said two magnet means (12,14) generating respective magnetic forces of predetermined magnitudes;
(b) at least two secondary cores (18,20) mounted on the floor, and spaced from each other along the track, said two cores (18,20) being held in non-contact relation to said two magnet means (12,14) during the movement of the carriage (10) along the track, the spacing (L1) between said two magnet means (12,14) being different from the spacing (L2) between said two secondary cores (18,20), said two magnet means (12,14) exerting attractive forces on said two secondary cores (18,20) respectively when the carriage is close to the preselected position (P), so as to stop the carriage (10);
(c) detection means (22,24) for detecting a displacement velocity and a displacement direction of the carriage at a preselected position (P) to produce detecting signals representative of said displacement velocity and said displacement direction; and
(d) magnetic force adding means (12B,14B) responsive to said detecting signals for adding a magnetic force, corresponding to said displacement, to at least one of said two magnet means (12,14).

2. An apparatus for stopping a moving member (10) at a preselected position by electromagnetic means including the detection of the distance (X) of the moving member (10) from said position and the application of electromagnetic force (f) to the member tending to reduce said distance (X)
characterised in that the moving member is a carriage (10) movable along a track and the apparatus comprises
(a) at least two magnet means (12,14) mounted on the floor, and spaced from each other along the track, said two magnet means (12,14) generating respective magnetic forces of predetermined magnitudes;
(b) at least two secondary cores (18,20) mounted on the carriage (10) and spaced from each other along the track, said two cores (18,20) being held in non-contact relation to said two magnet means (12,14) during the movement of the carriage (10) along the track, the spacing (L1) between said two magnet means (12,14) being different from the spacing (L2) between said two secondary cores (18,20), said two magnet means (12,14) exerting attractive forces on said two secondary cores (18,20) respectively when the carriage is close to the preselected position (P), so as to stop the carriage (10);
(c) detection means (22,24) for detecting a displacement velocity and a displacement direction of the carriage at a preselected position (P) to produce detecting signals representative of said displacement velocity and said displacement direction; and
(d) magnetic force adding means (12B,14B) responsive to said detecting signals for adding a magnetic force, corresponding to said displacement, to at least one of said two magnet means (12,14).

3. An apparatus according to claim 1 or claim 2 in which said two magnet means (12,14) generate respective magnetic forces of the same magnitude.

4. An apparatus according to claim 1 or claim 2 in which said two magnet means (12,14) generate respective magnetic forces of different magnitudes.

5. An apparatus according to any preceding claim in which said two magnet means (12,14) comprise respective electromagnets.

6. An apparatus according to any one of claims 1-4 in which said two magnet means (12,14) comprise respective permanent magnets.

7. An apparatus according to any preceding claim in which said detection means (24A) comprises a plate (40) of an electrically conductive material attached to the carriage (10) and having a flat surface (40A) inclined along the track, and a sensor (42) supported on the floor, said inclined surface (40A) of said plate being brought into vertically spaced opposed relation to said sensor (42) when the carriage (10) is at the preselected position (P), said sensor sensing a gap (G) between said sensor (42) and said inclined surface (40A) to produce said detecting signal.

## Patentansprüche

1. Vorrichtung zum Stoppen eines beweglichen Teils (10) an einer vorgewählten Position mittels einer elektromagnetischen Einrichtung, die das Messen des Abstandes (X) des beweglichen Teils (10) von besagter Position und der Anwendung elektromagnetischer Kraft (f) auf das Teil einschließt mit der Tendenz, besagten Abstand (X) zu verringern,
dadurch gekennzeichnet, daß das bewegliche Teil ein Wagen (10) ist, der in Längsrichtung auf einer Strecke beweglich ist und die Vorrichtung folgendes aufweist:
(a) mindestens zwei Magneteinrichtungen (12, 14), die an dem Wagen (10) angeordnet und auf der Strecke in Längsrichtung voneinander beabstandet sind, wobei die beiden Magneteinrichtungen (12, 14) entsprechende magnetische Kräfte mit vorbestimmten Größen erzeugen;
(b) mindestens zwei Sekundärkerne (18, 20), die auf dem Boden angeordnet sind und auf der Strecke in Längsrichtung voneinander beabstandet sind, wobei die beiden Kerne (18, 20) während der Bewegung des Wagens (10) auf der Strecke in einem berührungslosen Verhältnis zu den beiden Magneteinrichtungen (12, 14) gehalten werden, wobei der Abstand (L1) zwischen den beiden besagten Magneteinrichtungen (12, 14) anders ist als der Abstand (L2) zwischen den beiden besagten Sekundärkernen (18, 20), wobei die beiden besagten Magneteinrichtungen (12, 14) jeweils Anziehungskräfte auf die beiden besagten Sekundärspulen (18, 20) ausüben, wenn der Wagen sich nahe an der vorgewählten Position (P) befindet, um den Wagen (10) zum Stehen zu bringen;
(c) eine Meßeinrichtung (22, 24) zum Messen einer Bewegungsgeschwindigkeit und einer Bewegungsrichtung des Wagens auf einem Weg an einer vorgewählten Position (P), um Meßsignale zu erzeugen, die besagte Bewegungsgeschwindigkeit und besagte Bewegungsrichtung auf dem Weg repräsentieren; und
(d) eine auf besagte Meßsignale ansprechende Magnetkraftaddiereinrichtung (12B, 14B) zum Addieren einer magnetischen Kraft, die besagtem Weg entspricht, zu mindestens einer der beiden besagten Magneteinrichtungen (12, 14).

2. Vorrichtung zum Stoppen eines beweglichen Teils (10) an einer vorgewählten Position mittels einer elektromagnetischen Einrichtung, die das Messen des Abstandes (X) des beweglichen Teils (10) von besagter Position und der Anwendung elektromagnetischer Kraft (f) auf das Teil einschließt mit der Tendenz, besagten Abstand (X) zu verringern,
dadurch gekennzeichnet, daß das bewegliche Teil ein Wagen (10) ist, der in Längsrichtung auf einer Strecke beweglich ist, und die Vorrichtung folgendes aufweist:
(a) mindestens zwei Magneteinrichtungen (12, 14), die auf dem Boden angeordnet und auf der Strecke in Längsrichtung voneinander beabstandet sind, wobei die beiden Magneteinrichtungen (12, 14) entsprechende magnetische Kräfte mit vorbestimmten Größen erzeugen;
(b) mindestens zwei Sekundärkerne (18, 20), die an dem Wagen (10) angeordnet und auf der Strecke in Längsrichtung voneinander beabstandet sind, wobei die beiden Kerne (18, 20) während der Bewegung des Wagens (10) auf der Strecke in einem berührungslosen Verhältnis zu den beiden Magneteinrichtungen (12, 14) gehalten werden, wobei der Abstand (L1) zwischen den beiden besagten Magneteinrichtungen (12, 14) anders ist als der Abstand (L2) zwischen den beiden besagten Sekundärkernen (18, 20), wobei die beiden besagten Magneteinrichtungen (12, 14) jeweils Anziehungskräfte auf die beiden besagten Sekundärspulen (18, 20) ausüben, wenn der Wagen sich nahe an der vorgewählten Position (P) befindet, um den Wagen (10) zum Stehen zu bringen;
(c) eine Meßeinrichtung (22, 24) zum Messen einer Bewegungsgeschwindigkeit und einer Bewegungsrichtung des Wagens auf dem Weg an einer vorgewählten Position (P), um Meßsignale zu erzeugen, die besagte Bewegungsgeschwindigkeit und besagte Bewegungsrichtung auf dem Weg repräsentieren; und
(d) eine auf besagte Meßsignale ansprechende Magnetkraftaddiereinrichtung (12B, 14B) zum Addieren einer magnetischen Kraft, die besagtem Weg entspricht, zu mindestens einer der beiden besagten Magneteinrichtungen (12, 14).

3. Vorrichtung nach Anspruch 1 oder 2, bei der die beiden besagten Magneteinrichtungen (12, 14) entsprechende magnetische Kräfte mit der gleichen Größe erzeugen.

4. Vorrichtung nach Anspruch 1 oder 2, bei der die beiden besagten Magneteinrichtungen (12, 14) entsprechende magnetische Kräfte mit unterschiedlichen Größen erzeugen.

5. Vorrichtung nach einem der vorangehenden Ansprüche, bei der die beiden besagten Magneteinrichtungen (12, 14) entsprechende Elektromagneten aufweisen.

6. Vorrichtung nach einem der Ansprüche 1 bis 4, bei der die beiden besagten Magneteinrichtungen (12, 14) entsprechende Dauermagneten aufweisen.

7. Vorrichtung nach einem der vorangehenden Ansprüche, bei der die besagte Meßeinrichtung (24A) aufweist: eine Platte (40) aus einem elektrisch leitenden Material, die am Wagen (10) angebracht ist und eine flache, in Längsrichtung zur Strecke geneigte Oberfläche (40A) hat, und einen Sensor (42), der auf dem Boden gelagert ist, wobei die geneigte Oberfläche (40A) besagter Platte in ein vertikal beabstandetes Verhältnis gegenüber besagtem Sensor (42) gebracht wird, wenn der Wagen (10) sich an der vorgewählten Position (P) befindet, wobei besagter Sensor einen Spalt (G) zwischen besagten Sensor (42) und besagter geneigter Oberfläche (40A) mißt, um besagtes Meßsignal zu erzeugen.

## Revendications

1. Appareil pour arrêter un élément qui se déplace (10) en une position présélectionnée à l'aide d'un moyen électromagnétique incluant la détection de la distance (X) de l'élément qui se déplace (10) par rapport à ladite position et l'application d'une force électromagnétique (f) à l'élément, laquelle force tend à réduire la distance (X),
caractérisé en ce que l'élément qui se déplace est un dispositif de convoyage (10) mobile le long d'une piste et l'appareil comprend :
(a) au moins deux moyens d'aimants (12, 14) montés sur le dispositif de convoyage (10) et espacés l'un de l'autre le long de la piste, lesdits deux moyens d'aimants (12, 14) générant des forces magnétiques respectives d'amplitudes prédéterminées ;
(b) au moins deux noyaux secondaires (18, 20) montés sur le sol et espacés l'un de l'autre le long de la piste, lesdits deux noyaux (18, 20) étant maintenus dans une relation de non contact par rapport audit deux moyens d'aimants (12, 14) pendant le déplacement du dispositif de convoyage (10) le long de la piste, l'espacement (L1) séparant lesdits deux aimants (12, 14) étant différents de l'espacement (L2) séparant lesdits deux noyaux secondaires (18, 20), lesdits deux moyens d'aimants (12, 14) exerçant respectivement des forces d'attraction sur lesdits deux noyaux secondaires (18, 20) lorsque le dispositif de convoyage est proche de la position présélectionnée (P) de manière à arrêter le dispositif de convoyage (10) ;
(c) un moyen de détection (22, 24) pour détecter une vitesse de déplacement et une direction de déplacement du dispositif de convoyage pour une position présélectionnée (P) afin de produire des signaux de détection représentatifs de ladite vitesse de déplacement et de ladite direction de déplacement ; et
(d) un moyen d'addition de force magnétique (12B, 14B) sensible auxdits signaux de détection pour additionner une force magnétique correspondant audit déplacement à au moins l'un desdits deux moyens d'aimants (12, 14).

2. Appareil pour arrêter un élément qui se déplace (10) en une position présélectionnée à l'aide d'un moyen électromagnétique incluant la détection de la distance (X) de l'élément qui se déplace (10) par rapport à ladite position et l'application d'une force électromagnétique (f) à l'élément, laquelle force tend à réduire la distance (X),
caractérisé en ce que l'élément qui se déplace est un dispositif de convoyage (10) mobile le long d'une piste et l'appareil comprend :
(a) au moins deux moyens d'aimants (12, 14) montés sur le sol et espacés l'un de l'autre le long de la piste, lesdits deux moyens d'aimants (12, 14) générant des forces magnétiques respectives d'amplitudes prédéterminées ;
(b) au moins deux noyaux secondaires (18, 20) montés sur le dispositif de convoyage (10) et espacés l'un de l'autre le long de la piste, lesdits deux noyaux (18, 20) étant maintenus dans une relation de non contact par rapport audit deux moyens d'aimants (12, 14) pendant le déplacement du dispositif de convoyage (10) le long de la piste, l'espacement (L1) séparant lesdits deux aimants (12, 14) étant différents de l'espacement (L2) séparant lesdits deux noyaux secondaires (18, 20), lesdits deux moyens d'aimants (12, 14) exerçant respectivement des forces d'attraction sur lesdits deux noyaux secondaires (18, 20) lorsque le dispositif de convoyage est proche de la position présélectionnée (P) de manière à arrêter le dispositif de convoyage (10) ;
(c) un moyen de détection (22, 24) pour détecter une vitesse de déplacement et une direction de déplacement du dispositif de convoyage pour une position présélectionnée (P) afin de produire des signaux de détection représentatifs de ladite vitesse de déplacement et de ladite direction de déplacement ; et
(d) un moyen d'addition de force magnétique (12B, 14B) sensible auxdits signaux de détection pour additionner une force magnétique correspondant audit déplacement à au moins l'un desdits deux moyens d'aimants (12, 14).

3. Appareil selon la revendication 1 ou 2, dans lequel lesdits deux moyens d'aimants (12, 14) génèrent des forces magnétiques respectives de même amplitude.

4. Appareil selon la revendication 1 ou 2, dans lequel lesdits deux moyens d'aimants (12, 14) génèrent des forces magnétiques respectives d'amplitudes différentes.

5. Appareil selon l'une quelconque des revendications précédentes, dans lequel lesdits deux moyens d'aimants (12, 14) comprennent des électroaimants respectifs.

6. Appareil selon l'une quelconque des revendications 1 à 4, dans lequel lesdits deux moyens d'aimants (12, 14) comprennent des aimants permanents respectifs.

7. Appareil selon l'une quelconque des revendications précédentes, dans lequel ledit moyen de détection (24A) comprend une plaque (40) en un matériau électriquement conducteur fixé au dispositif de convoyage (10) et comportant une surface plane (40A) inclinée le long de la piste et un détecteur (42) supporté sur le sol, ladite surface inclinée (40A) de ladite plaque étant amenée dans une position d'opposition par rapport audit détecteur (42) en en étant espacée verticalement lorsque le dispositif de convoyage (10) est à la position présélectionnée (P), ledit détecteur détectant un espace (G) entre ledit détecteur (42) et ladite surface inclinée (40A) pour produire ledit signal de détection.
